# EUROPÄISCHE PATENTSCHRIFT

(11) **EP 1 153 639 B1**
(45) Veröffentlichungstag und Bekanntmachung des Hinweises auf die Patenterteilung: **16.07.2008**
(21) Anmeldenummer: 01810357.2
(22) Anmeldetag: 10.04.2001
(51) Int. Cl.: B01D 3/00, B01D 53/18, F28F 25/02, B01J 10/00

(54) **Kolonne mit einem Boden zwischen Füllkörperabschnitten**
Column with a plate between packing sections
Une colonne avec un plateau entre des parties de garnissage

(30) Priorität: 08.05.2000 EP 00810388
(43) Veröffentlichungstag der Anmeldung: 14.11.2001
(73) Patentinhaber: Sulzer Chemtech AG, 8404 Winterthur (CH)
(72) Erfinder: Bachmann, Christian, 8548 Ellikon/Thur (CH); Fehr, Emil, 8415 Berg am Irchel (CH); Faust, Adrian, 8362 Balterswil (CH)
(74) Vertreter: Sulzer Management AG

(56) Entgegenhaltungen:
- EP-A- 0 282 753
- EP-A- 0 367 525
- EP-A- 1 013 324
- WO-A-99/06130
- DE-A- 2 943 687

## Beschreibung

Die Erfindung betrifft eine Kolonne mit einem Boden zwischen Füllkörperabschnitten gemäss Oberbegriff von Anspruch 1 und ein Verfahren zum Betreiben der Kolonne.

Es sind Kolonneneinbauten bekannt, die als Kaminbodensammler gleichzeitig die Funktion von Flüssigkeitsverteilem haben. In einer derartigen Vorrichtung erfolgt die Verteilung der Flüssigkeit aus einem Pufferraum, der sich zwischen zylindrischen oder schachtförmigen Gaskaminen befindet, und durch eine Bodenfläche, die beispielsweise Grundlöcher enthält. Anstelle von Grundlöchern werden auch Röhrchen verwendet (siehe die Patentschrift DE 2943687), die oberhalb des Bodens eine oder mehrere seitliche. Durchbrüche enthalten (Austrittsöffnungen für die Flüssigkeit) und die unterhalb des Bodens zum Schutz der abfliessenden Flüssigkeit gegen die Gasströmung (Mitreissen von Tropfen) als Ableitrohre ausgebildet sind. Solche Sammler-Verteiler-Böden sind besonders dann geeignet, wenn Kolonnen für Flüssigkeitsbelastungen ausgelegt sein müssen, die in grossen Bereichen variieren können, und/oder wenn in einer Kolonne eine Flüssigkeit behandelt werden muss, die Schmutzpartikel enthält. Die Konstruktion eines Sammler-Verteiler-Bodens mit Röhrchen statt Grundlöchern ist allerdings sehr aufwendig, da viele Röhrchen in den Boden einzuschweissen sind und die Röhrchen dicht eingefügt sein müssen.

Damit eine Flüssigkeitsverteilung gleichmässig ist, müssen die Grundlöcher oder Röhrchen in einem Muster angeordnet sein, für das diese Ausflussstellen über den ganzen Kolonnenquerschnitt eine weitgehend konstante Verteilungsdichte haben. Bei den bekannten Sammler-Verteiler-Böden hat dieses Erfordernis zur Folge, dass die Gaskamine relativ kleine Querschnittsflächen haben müssen. Es müssen daher im Boden viele Kamine dicht eingeschweisst werden, was - wie bereits für die Röhrchen - einen grossen Aufwand bedeutet.

Aufgabe der Erfindung ist es, eine Kolonne zu schaffen, die zwischen Füllkörperabschnitten angeordnete Sammler-Verteiler-Böden aufweist und die mit einer Flüssigkeitsbelastung, die in einem grossen Bereich variiert, und/oder mit verschmutzenden Flüssigkeiten betreibbar ist. Ausserdem soll der Herstellaufwand für die genannten Böden geringer sein als für die Böden bekannter Kolonnen. Diese Aufgabe wird durch die im Anspruch 1 definierte Kolonne gelöst.

Die Kolonne enthält einen Boden zwischen einem oberen und einem unteren Füllkörperabschnitt. Mit diesem Boden wird Flüssigkeit aus dem oberen Abschnitt in einem Pufferraum gesammelt und gesammelte Flüssigkeit auf den unteren Abschnitt verteilt. Kamine dienen als Passagen für einen Gastransport durch den Pufferraum. In vertikalen Wänden der Kamine sind Austrittsöffnungen des Pufferraums und vor den Austrittsöffnungen Leitorgane für die zu verteilende Flüssigkeit angeordnet. Jede Austrittsöffnung und ihr zugeordnetes Leitorgan sind so ausgebildet, dass die Flüssigkeit als weitgehend freier Strahl - unbehindert durch einen Rückstau - auf eine Umlenkfläche des Leitorgans auftrifft. Die für den Gastransport zur Verfügung stehende Kaminquerschnittsfläche ist durch die Leitorgane um höchstens 20% eingeschränkt.

Die Leitorgane der erfindungsgemässen Kolonne lassen sich verglichen mit den oben genannten Röhrchen weit kostengünstiger montieren, da keine dichten Schweissnähte erforderlich sind. Gleichzeitig können die Kaminquerschnitte grösser gemacht werden, was ebenfalls zu einer Kostenreduktion führt.

Die abhängigen Ansprüche 2 bis 9 betreffen vorteilhafte Ausführungsformen der erfindungsgemässen Kolonne. Ein Verfahren zum Betreiben dieser Kolonne ist Gegenstand des Anspruchs 10.

Nachfolgend wird die Erfindung anhand der Zeichnungen erläutert. Es zeigen:
- Fig. 1: einen Querschnitt durch eine erfindungsgemässe Kolonne mit einer Draufsicht auf einen Sammler-Verteiler-Boden,
- Fig. 2: ausschnittsweise einen Sammler-Verteiler-Boden des gleichen Typs wie in Fig. 2, als Schrägbild dargestellt,
- Fig. 3: den oberen Teil eines Leitorgans des Bodens einer erfindungsgemässen Kolonne,
- Fig. 4: einen Längsschnitt durch das ganze Leitorgan der Fig. 3, nämlich ein Schnitt nach der Linie IV - IV in Fig. 3,
- Fig. 5: ein winkelförmiges Leitorgan, das vor drei Austrittsöffnungen angeordnet ist,
- Fig. 6, 7: zwei Modifikationen des Leitorgans der Fig. 5,
- Fig. 8 - 10: Querschnitte durch weitere Ausführungsformen des Leitorgans,
- Fig. 11, 12: schematische Darstellungen von Gaskaminen mit bekannten Hutformen und
- Fig. 13: einen horizontalen Querschnitt durch einen schachtförmigen Kamin einer erfindungsgemässen Kolonne.

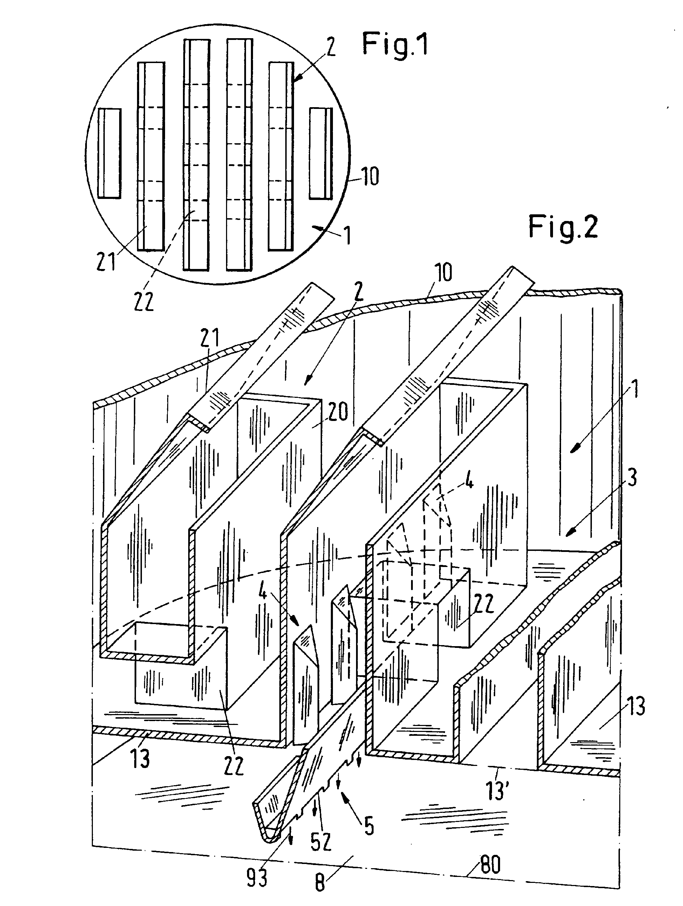

Der Querschnitt durch eine Kolonne in Fig. 1 zeigt als Draufsicht einen innerhalb einer Kolonnenwand 10 angeordneten Sammler-Verteiler-Boden 1, der schachtförmige Gaskamine 2 aufweist. Das Schrägbild der Fig. 2 stellt im Detail solche Gaskamine 2 dar, die mit lamellenförmigen Schirmen 21 gegen einen Flüssigkeitseintritt überdacht sind. Diese Schirme 21 sind gegenüber Fig. 1 umgekehrt orientiert: ein Gasdurchlass zwischen Schirm 21 und einer Seitenwandung 20 des Kamins 2 ist gegen das Kolonnenzentrum statt gegen die Peripherie offen. Die Kamine 2 sind als versteifende Konstruktionselemente ausgebildet, die den Boden 1 gegen ein Durchbiegen stabilisieren. Zu dieser Stabilisierung sind die Kamine 2 in ihrem oberen Bereich mittels der Schirme 21 als Lamellensammler ausgebildet, wobei die Schirme 21 einen kreisförmigen Randbereich der Kolonne längs parallelen Kreissehnen in Form von durchgehenden Wandflächen verbinden.

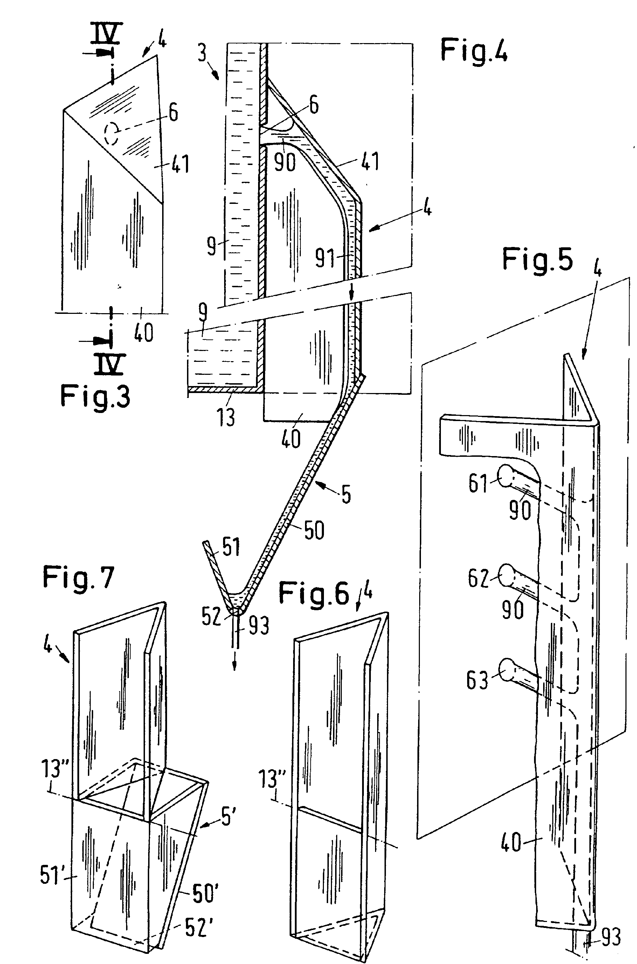

Der Boden 1 liegt zwischen einem oberen, nicht dargestellten Füllkörperabschnitt und einem unteren Füllkörperabschnitt 8. Die Füllkörper können geordnete Packungen sein oder Schüttungen von Füllkörperelementen. Mit dem Boden 1 wird Flüssigkeit 9 (siehe Fig.4) aus dem oberen Füllkörperabschnitt in einem Pufferraum 3 gesammelt und gesammelte Flüssigkeit 9 auf den unteren Abschnitt 8 verteilt. Eine Bodenfläche 13 des Pufferraums 3 enthält keine Grundlöcher. In der Darstellung der Fig. 2 bildet eine vertikale Schnittebene zwei parallele Schnittlinien, nämlich eine strichpunktiert gezeichnete Unterkante 13' der Bodenfläche 13 und eine strichpunktiert gezeichnete Linie 80, die auf der oberen Randfläche des Füllkörperabschnitt 8 liegt.

In der Kolonne wird ein Gas im Gegenstrom zur Flüssigkeit 9 geführt. Die Kamine 2 dienen als Passagen für den Gastransport durch den Pufferraum 3. Die gesamte Querschnittsfläche der Kamine 2 beträgt - bezogen auf den Kolonnenquerschnitt -im Maximum rund 40%. Querkanäle 22, die tunnelartige Durchgänge durch die Kamine 2 bilden, ermöglichen einen raschen hydrodynamischen Ausgleich im Pufferraum 3, wenn das Niveau der Flüssigkeit 9 nicht überall gleich hoch ist.

In den vertikalen Wänden 20 der Kamine 2 sind Austrittsöffnungen 6 - siehe Figuren 4 und 5 - angeordnet, durch die zu verteilende Flüssigkeit 9 aus dem Pufferraum 3 in Leitorgane 4 vor den Austrittsöffnungen 6 austreten kann.

Jede Austrittsöffnung 6 und ihr zugeordnetes Leitorgan 4 sind so ausgebildet, dass die Flüssigkeit als weitgehend freier Strahl 90 - unbehindert durch einen Rückstau - auf eine Umlenkfläche 41 des Leitorgans 4 auftreffen kann. Die horizontalen Querschnittsflächen der Leitorgane 4 müssen möglichst klein sein, damit die für den Gastransport zur Verfügung stehende Kaminquerschnittsfläche möglichst gross ist. Erfindungsgemäss schränken die Leitorgane 4 die Kaminquerschnittsfläche um höchstens 20% ein.

Die oberste oder einzige Austrittsöffnung 6 eines Leitorgans 4 kann vor einem geneigten Flächenstück 41 des Leitorgans 4 angeordnet sein (Fig. 4), um einen Rückstau klein zu halten. Anstelle eines ebenen Flächenstücks 41 kann auch ein gekrümmtes vorgesehen sein. Durch das Flächenstück 41, auf das der Flüssigkeitsstrahl 90 unter einem Winkel von höchstens 60° auftrifft, wird die Flüssigkeit 9 nach unten abgelenkt und als Kanalströmung 91 gegen den unteren Füllkörperabschnitt 8 geführt, wo es als Strahl 93 aus dem Leitorgan 4 austritt.

Das Leitorgan 4 bildet im Kamin 2 einen vertikalen Kanal zwischen zwei ebenen Wandstücken 40, in dem die strömende Flüssigkeit 91 aufgrund der Kanalform einen im wesentlichen isodiametralen Querschnitt aufweist, nämlich so, dass für alle Paare diametral angeordener Randpunkte des Querschnitts die Abstände jeweils weitgehend gleich gross sind. Der Kanal ist insbesondere winkelförmig ausgebildet, wobei der Kanalquerschnitt vorzugsweise die Form eines gleichschenkligen, insbesondere eines gleichseitigen Dreiecks hat und die Basis dieses Dreiecks auf der Kaminwand 20 liegt. Der Querschnitt der im Kanal strömenden Flüssigkeit 91 hat beispielsweise angenähert die Form eines gleichseitigen Dreiecks und kann damit als im wesentlichen isodiametral angesehen werden.

Wie Fig. 5 illustriert, kann dem Leitorgan 4 eine Mehrzahl von Austrittsöffnungen 61, 62, 63 zugeordnet sein; diese liegen auf einer vertikalen Linie. Die einzelnen Austrittsöffnungen 61, 62, 63 sind kleiner, als wenn nur eine einzige Austrittsöffnung mit gleicher Durchtrittskapazität vorliegen würde. Daher ist das Problem mit einem möglichen Rückstau durch das umlenkende Leitorgan 4 weniger ausgeprägt. Der Querschnitt des Leitorgans 4 kann kleiner gewählt werden, und auf eine geneigte oder gekrümmte Umlenkfläche 41 kann verzichtet werden. Ein Leitorgan 4 mit zwei oder mehr Austrittsöffnungen 61, 62, 63 ist besonders für grosse Flüssigkeitsbelastungsbereiche vorgesehen.

In Fig. 2 bzw. 4 geht das Leitorgan 4 in einen Verteilbereich 5 über, in dem zwei in einem Winkel zueinander stehende Wandstücke 50 und 51 eine lineare Ausbreitung der Flüssigkeit parallel zur Längserstreckung der Kamine 2 bewirken. Im Scheitel des durch die Wandstücke 50 und 51 gebildeten Winkels befinden sich schmale Zwischenstege und schlitzförmige Durchtrittsöffnungen 52, aus denen ein ganz oder weitgehend geschlossener Flüssigkeitsvorhang 93 austritt.

Unterhalb dem Pufferraum 3 kann das Leitorgan 4 in einen vertikalen Kanal oder auch einen geneigten Kanal (nicht gezeigt) übergehen, in dem die strömende Flüssigkeit weiterhin aufgrund der Kanalform einen im wesentlichen isodiametralen Querschnitt aufweist: siehe Fig. 6. Der untere Teil des Leitorgans 4, der unter dem Niveau 13" der Bodenfläche 13 liegt, kann ein offener Kanal oder ein mit einer Wand 42 abgedeckter Kanal sein.

Die Fig. 7 zeigt eine Variante zum Leitorgan 4 der Figuren 2 und 4 mit einem Verteilbereich 5'. Bei diesem Ausführungsbeispiel wird die Flüssigkeit 9 zwischen zwei Wänden 50' und 51' auf eine spaltförmige Austrittsöffnung 52' verteilt, deren Ausdehnung auf die Breite des Leitorgans 4 beschränkt ist.

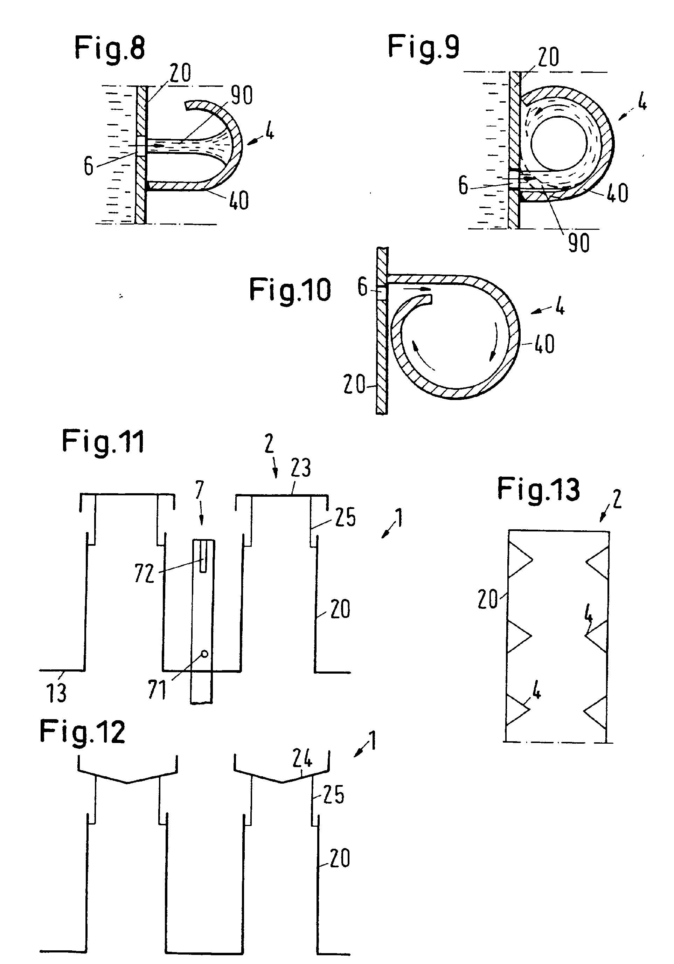

Die Fig. 8 zeigt ein Leitorgan 4 mit einem halbkreisförmigen Kanal. In den Figuren 9 und 10 sind Leitorgane 4, dargestellt, die jeweils einen im wesentlichen zylindrischen Kanal bilden. Bei diesen Ausführungsformen sind die Austrittsöffnungen 6 so angeordnet, dass der austretende Flüssigkeitsstrahl 90 zumindest angenähert tangential - ohne Rückstau - auf die innere Wand des Leitorgans 4 auftrifft. Der von diesem Leitorgan 4 gebildete Kanal wird wendelartig durchströmt, wobei die Ganghöhe der wendelförmigen Strömung mit wachsender Fallhöhe zunimmt. Mit einer derartigen Strömungsform lässt sich die Flüssigkeit 9 sehr rasch aus dem Inneren des Kamins 2 wegtransportieren.

Statt den lamellenförmigen Schirmen 21 können die Überdachungen der Kamine 2 auch aus kappenartigen Hüten 23, Fig. 11, oder kanalförmigen Hüten 24, Fig. 12, gebildet sein. Die kanalförmigen Hüte 24 werden in der Regel geneigt eingebaut. Mit Vorteil werden sie alternierend gegen hinten abfallend bzw. nach vorne abfallend geneigt angeordnet, wodurch sich eine Vermischung der gesammelten Flüssigkeit 9 über den Kolonnenquerschnitt einstellt. Die Hüte 23 bzw. 24 sitzen auf Trägerstangen 15, die an der Kaminwandung 20 befestigt sind, in einer Höhe, für die ein Gasauslass aus den Kaminen 2 ausreichend gross ist. Die Fig. 11 zeigt, dass im Pufferraum 3 zwischen den Kaminen 2 auch röhrchenförmige Ausflusstellen 7 (mit seitlichen Austrittsstellen 71, 72) angeordnet sein können, die zu den erfindungsgemässen Austrittsstellen 6 in den Kaminen 2 hinzu kommen, um eine grössere Dichte an Ausflussstellen zu erhalten.

Die erfindungsgemässen Austrittsstellen 6 in den Kaminen 2 sind beispielsweise, wie es in Fig. 2 dargestellt ist, nur auf einer Seite des Kamininneren angeordnet. Vorteilhafter ist es, um die Dichte an Ausflussstellen zu vergrössern, wenn sie - wie in Fig. 13 mit den Leitorganen 4 gezeigt - auf beiden Seiten des Kamins 2 angeordnet sind.

Bei einem Verfahren zum Betreiben einer erfindungsgemässen Kolonne wird eine Flüssigkeit im Gegenstrom zu einer gasförmigen Phase mit dieser in Kontakt gebracht und zwar in Füllkörpern, welche die Form von geordneten Packungen oder von Schüttungen haben. Dabei kann der auf den Kolonnenquerschnitt bezogene Volumenstrom der Flüssigkeit maximal Lₘₐₓ = 100 m³ / m² h und minimal Lₘᵢₙ = 0,5 m³ / m² h betragen, wobei das Verhältnis Lₘₐₓ : Lₘᵢₙ, nämlich der Belastungsbereich, 30 : 1 sein kann.

## Patentansprüche

1. Kolonne mit einem Boden (1) zwischen einem oberen und einem unteren Füllkörperabschnitt (8), mit welchem Boden Flüssigkeit (9) aus dem oberen Abschnitt in einem Pufferraum (3) des Bodens (1) sammelbar und gesammelte Flüssigkeit auf den unteren Abschnitt (8) verteilbar ist, wobei Kamine (2) als Passagen für einen Gastransport durch den Pufferraum dienen, **dadurch gekennzeichnet, dass** in vertikalen Wänden (20) der Kamine Austrittsöffnungen (6) des Pufferraums und vor den Austrittsöffnungen Leitorgane (4) für die zu verteilende Flüssigkeit angeordnet sind und dass jede Austrittsöffnung und ihr zugeordnetes Leitorgan so ausgebildet sind, dass die Flüssigkeit als weitgehend freier Strahl (90), unbehindert durch einen Rückstau durch das umlenkende Leitorgan, auf eine Umlenkfläche (41) des Leitorgans auftrifft, durch welche die Flüssigkeit nach unten in Richtung des unteren Füllkörperabschnitts umlenkbar ist.

2. Kolonne nach Anspruch 1, **dadurch gekennzeichnet, dass** das Leitorgan (4) im Kamin (2) einen vertikalen Kanal bildet, in dem die strömende Flüssigkeit aufgrund der Kanalform einen im wesentlichen isodiametralen Querschnitt aufweist, und dass der Kanal insbesondere winkelförmig ausgebildet ist, wobei der Kanalquerschnitt vorzugsweise die Form eines gleichschenkligen Dreiecks hat und die Basis dieses Dreiecks auf der Kaminwand (20) liegt.

3. Kolonne nach Anspruch 1 oder 2, **dadurch gekennzeichnet, dass** unterhalb dem Pufferraum (3) das Leitorgan (4) einen vertikalen oder geneigten Kanal bildet, in dem die strömende Flüssigkeit (9) aufgrund der Kanalform einen im wesentlichen isodiametralen Querschnitt aufweist, oder dass dort Wandstücke (50, 51; 50', 51') angeordnet sind, die eine lineare Ausbreitung der Flüssigkeit bewirken.

4. Kolonne nach einem der Ansprüche 1 bis 3, **dadurch gekennzeichnet, dass** dem Leitorgan (4) zwei oder mehr Austrittsöffnungen (61, 62, 63) zugeordnet sind, deren Positionen vertikal übereinander liegen.

5. Kolonne nach einem der Ansprüche 1 bis 4, **dadurch gekennzeichnet, dass** das Leitorgan (4) einen im wesentlichen zylindrischen Kanal bildet, bezüglich dem eine Austrittsöffnung (6) so angeordnet ist, dass der austretende Flüssigkeitsstrahl (90) zumindest angenähert tangential auf die innere Kanalwand (40) auftrifft und anschliessend den Kanal wendelartig durchströmt.

6. Kolonne nach einem der Ansprüche 1 bis 5, **dadurch gekennzeichnet, dass** die oberste Austrittsöffnung (6) vor einem geneigten oder gekrümmten Flächenstück (41) des Leitorgans (4) angeordnet ist, durch das die Flüssigkeit (9) gegen unten abgelenkt wird und auf das der Flüssigkeitsstrahl (90) unter einem Winkel von höchstens 60° auftrifft.

7. Kolonne nach einem der Ansprüche 1 bis 6, **dadurch gekennzeichnet, dass** im Pufferraum (3) zwischen den Kaminen (2) zusätzlich röhrchenförmige Ausflusstellen (7) angeordnet sind.

8. Kolonne nach einem der Ansprüche 1 bis 7, **dadurch gekennzeichnet, dass** die Kamine (2) als versteifende Konstruktionselemente ausgebildet sind, die den Boden (1) gegen ein Durchbiegen stabilisieren.

9. Kolonne nach Anspruch 8, **dadurch gekennzeichnet, dass** die Kamine (2) in ihrem oberen Bereich als Lamellensammler ausgebildet sind und Lamellen (21) der Kamine Randbereiche der Kolonne als durchgehende Wandflächen verbinden.

10. Verfahren zum Betreiben einer Kolonne gemäss einem der Ansprüche 1 bis 9 **dadurch gekennzeichnet, dass** in Füllkörpern (8), welche die Form von geordneten Packungen oder von Schüttungen haben, eine Flüssigkeit (9) im Gegenstrom mit einer gasförmigen Phase in Kontakt gebracht wird und dass der auf den Kolonnenquerschnitt bezogene Volumenstrom der Flüssigkeit maximal Lₘₐₓ = 100 m³/ m² h und minimal Lₘᵢₙ = 0,5 m³ / m² h beträgt, wobei das Verhältnis Lₘₐₓ : Lₘᵢₙ, nämlich der Belastungsbereich, 30 : 1 sein kann.

## Claims

1. Column comprising a base (1) between an upper and a lower packing section (8), with liquid (9) being collectable with said base from the upper section in a buffer chamber (3) and collected liquid being distributable onto the lower section (8), with chimneys (2) serving as passages for a gas transport through the buffer chamber, **characterized in that**
outlet openings (6) of the buffer chamber are arranged in vertical walls (20) of the chimneys and guide members (4) for the liquid to be distributed are arranged ahead of the outlet openings; and **in that** each outlet opening and its associated guide member are formed in such a manner that the liquid is incident onto a deflection surface (41) of the guide member as a largely free jet (90) unimpeded by a back pressure due to the deflecting guide member, and the liquid is deflectable by the deflecting surface into the direction of the lower packing section.

2. Column in accordance with claim 1, **characterized in that** the guide member (4) forms a vertical channel in the chimney (2) in which the flowing liquid has a substantially isodiametrical cross-section as a result of the channel shape; and **in that** the channel is in particular designed in the shape of an angle, with the channel cross-section preferably having the shape of an isosceles triangle and with the base of this triangle lying on the chimney wall (20).

3. Column in accordance with claim 1 or claim 2, **characterized in that** the guide member (4) forms a vertical or inclined channel beneath the buffer chamber (3) in which the flowing liquid (9) has a substantially isodiametrical cross-section as a result of the channel shape; or **in that** wall sections (50, 51; 50', 51') are arranged there which cause a linear propagation of the liquid.

4. Column in accordance with any one of the claims 1 to 3, **characterized in that** two or more outlet openings (61, 62, 63) are associated with the guide member (4), the positions of which lie vertically one above the other.

5. Column in accordance with any one of the claims 1 to 4, **characterized in that** the guide member (4) forms a substantially cylindrical channel with respect to which an outlet opening (6) is arranged in such a manner that the emerging liquid jet (90) is at least approximately tangentially incident onto the inner channel wall (40) and then flows through the channel in a helical manner.

6. Column in accordance with any one of the claims 1 to 5, **characterized in that** the uppermost outlet opening (6) is arranged ahead of an inclined or curved surface piece (41) of the guide member (4), through which the liquid (9) is deflected downwardly and onto which the liquid jet (90) is incident at an angle of at most 60°.

7. Column in accordance with any one of the claims 1 to 6, **characterized in that** tubular outflow positions (7) are additionally arranged in the buffer chamber (3) between the chimneys (2).

8. Column in accordance with any one of the claims 1 to 7, **characterized in that** the chimneys (2) are formed as stiffening constructional elements which stabilize the base (1) against a bending deflection.

9. Column in accordance with claim 8, **characterized in that** the chimneys (2) are formed in their upper region as lamella collectors and lamella (21) of the chimneys connect edge regions of the column as through-going wall surfaces.

10. Method for the operation of a column in accordance with any one of the claims 1 to 9, **characterized in that** a liquid (9) is brought in counter-flow into contact with a gaseous phase in packings (8) which have the form of ordered packings or which are provided in bulk; and **in that** in relation to the column cross-section the volume flow of the liquid amounts to a maximum of Lₘₐₓ = 100 m³ / m² h and a minimum of Lₘᵢₙ = 0.5 m³ / m² h, with it being possible for the ratio of Lₘₐₓ: Lₘᵢₙ, namely the loading range, to be 30: 1.

## Revendications

1. Colonne comportant un fond (1) entre une partie de garnissage supérieure et une partie de garnissage inférieure (8), avec lequel fond le liquide (9) sortant de la partie supérieure peut être collecté dans un espace de stockage temporaire (3) du fond (1) et le liquide collecté peut être distribué sur la partie inférieure (8), des cheminées (2) étant destinées à former des passages pour le transport d'un gaz à travers l'espace de stockage temporaire, **caractérisée en ce que** dans des parois verticales (20) des cheminées sont ménagés des orifices de sortie (6) de l'espace de stockage temporaire, et des organes de guidage (4) pour le liquide à distribuer sont disposés devant les orifices de sortie, et **en ce que** chaque orifice de sortie et chaque organe de guidage qui lui est associé sont réalisés de telle sorte que le liquide est projeté, sous la forme d'un jet (90) en grande partie libre, non gêné par une retenue due à l'organe de guidage, sur une surface de déviation (41) de l'organe de guidage (4), par laquelle le liquide peut être dévié vers le bas en direction de la partie de garnissage inférieure.

2. Colonne selon la revendication 1, **caractérisée en ce que** l'organe de guidage (4) forme dans la cheminée (2) un conduit vertical, dans lequel le liquide affluant possède une section sensiblement isodiamétrale en raison de la forme du conduit, et **en ce que** le conduit est réalisé en particulier avec une forme angulaire, la section du conduit ayant de préférence la forme d'un triangle équilatéral et la base de ce triangle reposant sur la paroi (20) de la cheminée.

3. Colonne selon la revendication 1 ou 2, **caractérisée en ce que**, en dessous de l'espace de stockage temporaire (3), l'organe de guidage (4) forme un conduit vertical ou incliné, dans lequel le liquide affluant possède une section sensiblement isodiamétrale en raison de la forme du conduit, et **en ce que** des tronçons de paroi (50, 51 ; 50', 51') sont disposés à cet emplacement, lesquels induisent un déploiement linéaire du liquide.

4. Colonne selon l'une quelconque des revendications 1 à 3, **caractérisée en ce qu'**à l'organe de guidage (4) sont associés deux ou plusieurs orifices de sortie (61, 62, 63), qui sont positionnés verticalement les uns au-dessus des autres.

5. Colonne selon l'une quelconque des revendications 1 à 4, **caractérisée en ce que** l'organe de guidage (4) forme un conduit sensiblement cylindrique, par rapport auquel un orifice de sortie (6) est disposé de telle sorte que le jet de liquide (90) sortant est projeté au moins sensiblement tangentiellement sur la paroi intérieure (40) du conduit et circule ensuite en forme de spirale à travers le conduit.

6. Colonne selon l'une quelconque des revendications 1 à 5, **caractérisée en ce que** l'orifice de sortie (6) supérieur est disposé devant une partie (41) inclinée ou courbe de l'organe de guidage (4), par laquelle le liquide (9) est dévié vers le bas et sur laquelle est projeté le jet de liquide (90) en formant un angle de 60° maximum.

7. Colonne selon l'une quelconque des revendications 1 à 6, **caractérisée en ce que** des zones d'évacuation (7) en forme de petits tubes sont disposées en plus dans l'espace de stockage temporaire (3) entre les cheminées (2).

8. Colonne selon l'une quelconque des revendications 1 à 7, **caractérisée en ce que** les cheminées (2) sont réalisées sous forme d'éléments de raidissement, qui stabilisent le fond (1) contre les fléchissements.

9. Colonne selon la revendication 8, **caractérisée en ce que** les cheminées (2) sont réalisées dans leur partie supérieure sous forme de collecteurs à lamelles et les lamelles (21) des cheminées relient des zones périphériques de la colonne sous forme de surfaces de paroi continues.

10. Procédé d'exploitation d'une colonne selon l'une quelconque des revendications 1 à 4, **caractérisé en ce que** dans les corps de garnissage (8), qui ont la forme de paquets ordonnés ou sont entassés en vrac, un liquide (9) circulant en contre-courant est amené en contact avec une phase gazeuse, et **en ce que** le flux volumique du liquide par rapport à la section de la colonne est égal au maximum à Lₘₐₓ = 100 m³/m²h et au minimum à Lₘᵢₙ = 0,5 m³/m²h, le rapport Lₘₐₓ / Lₘᵢₙ, à savoir la zone de charge, pouvant être égal à 30 : 1.
